# EUROPEAN PATENT SPECIFICATION

(11) **EP 4 205 951 B1**
(45) Date of publication and mention of the grant of the patent: **16.10.2024**
(21) Application number: 22176383.2
(22) Date of filing: 31.05.2022
(51) Int. Cl.: B29C 65/02, G01S 13/931, G01S 7/02, B29L 31/30, B60R 19/02, B60R 19/48

(54) **A SUPPORT STRUCTURE**
STÜTZSTRUKTUR
STRUCTURE DE SUPPORT

(30) Priority: 28.12.2021 CN 202123344114 U
(43) Date of publication of application: 05.07.2023
(73) Proprietor: Yanfeng Plastic Omnium Automotive Exterior Systems Co., Ltd., Shanghai 201805 (CN); OPmobility SE, 69007 Lyon (FR)
(72) Inventor: WANG, Qingzhu, 201805 Shanghai (CN)
(74) Representative: LLR

(56) References cited:
- KR-A- 20120 025 831

## Description

The present invention relates to the field of automobile body part, and more particularly, to a support structure of a body part such as a radar support.

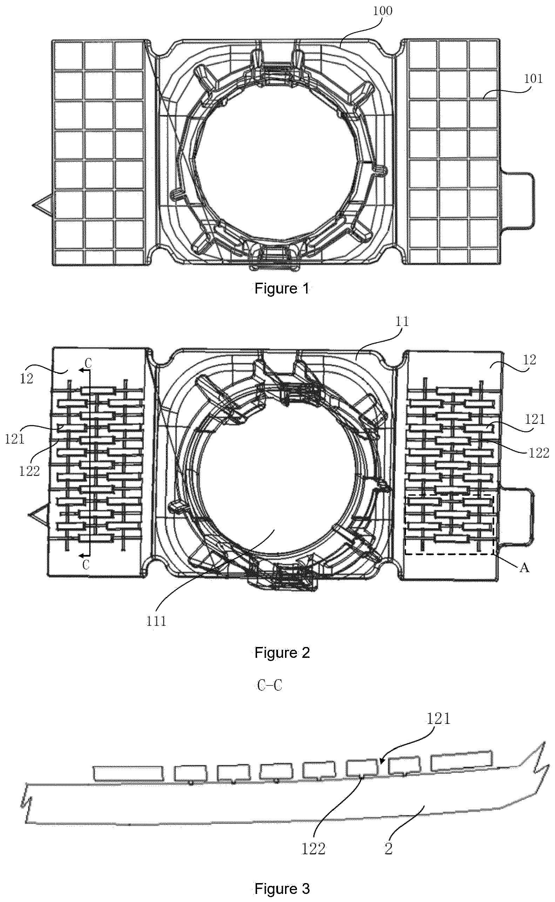

Currently, a radar support is generally mounted to an automobile bumper by welding, and a welding tensile (pull-out) force above 250 N is required. As shown in Fig. 1, in the prior art, in order to increase the welding tensile force, generally intersected grid ribs 101 are provided in the area where a radar support 100 is welded. During welding, solder joints are on the grid ribs 101. As the grid ribs 101 are connected with each other, when heated during welding, the whole grid ribs 101 will expand and deform, thus producing welding marks and affecting the appearance. In order to improve weld marks, a general way is to reduce the depth of welding, which, however, will decrease the welding tensile force and cannot satisfy the welding tensile force requirements. Therefore, how to achieve welding a radar support without welding marks while satisfying the welding tensile force requirements is a problem that those skilled in the art urgently needs to solve.

The document KR20120025831.A discloses a support structure, configured to be welded to a vehicle body part and comprising a support body and a welding part.

An objective of the present invention is to provide a support structure, which can realize welding without welding marks while satisfying the requirements of welding tensile (pull out) force.

The present invention provides a support structure, configured to be welded to a vehicle body part, it comprises:
- a support body, preferentially provided with a mounting means for attaching a technical element;
- a welding part, arranged at a periphery of the support body, including:
   - a plurality of buffer apertures spaced apart from each other,
   - a plurality of crisscross ribs, each crisscross rib being disconnected from each other and arranged between two adjacent buffer apertures,
wherein a solder joint between the support structure and the vehicle body part is located on the crisscross rib.

Preferentially, the solder joint is located at a center of the crisscross rib.

According to a preferred embodiment, the buffer apertures are of essentially a same shape and size, and distributed in a mesh structure with a essentially uniform transversal and longitudinal spacing between each other.

Preferentially, the crisscross ribs are arranged both between two adjacent buffer apertures along a transversal direction and between two adjacent buffer apertures along a longitudinal direction perpendicular to the transversal direction, wherein a longitudinal length and a transversal length of the crisscross ribs are respectively equal to the longitudinal spacing and the transversal spacing between the buffer apertures.

According to a preferred embodiment, the welding part is symmetrically arranged at both sides of the support body with symmetric configurations of the buffer apertures and the crisscross ribs.

According to a preferred embodiment, the buffer apertures contain veil or thickness reduction material in its full or partial aperture area.

Further, the buffer apertures are in a shape of a rectangle, a square, or an oval.

Further, a transversal spacing between two adjacent buffer apertures is 3 to 4 mm, and a longitudinal spacing between two adjacent buffer apertures is 2.5 to 3.5 mm.

Further, the transversal spacing is 3.2 mm and the longitudinal spacing is 2.8 mm.

Further, the length, width, and height of the buffer apertures are respectively 4.7 to 5 mm, 0.8 to 1 mm, and 1.2 to 1.5 mm.

Further, the height of the crisscross ribs is 0.3 mm, and the width of the crisscross ribs is 0.3 to 0.5 mm.

Further, the buffer apertures, the crisscross ribs, the welding part, and the support body are integrally formed by injection molding as one piece.

According to the invention, the support structure is a radar support, an air curtain or a reinforcing support.

The present invention also relates to a body part of a vehicle, for example a bumper skin, it comprises the support structure as described above.

The support structure of the present invention, by setting a plurality of crisscross ribs on the welding part of the support structure, enables the weld heads to be welded onto the crisscross ribs during welding, thus increasing the quantity of the molten welding material and increasing the welding tensile force. By arranging the buffer apertures between the crisscross ribs, a deformation space is provided for the expansion of the support structure during the welding and heating process, so that the entire support structure hardly undergoes thermal expansion and deformation as a whole, thereby eliminating thermal expansion and contraction stress, and thereby eliminating welding marks.
Fig. 1 is a schematic structural view of a radar support in the prior art;
Fig. 2 is a schematic structural view of a radar support provided by an embodiment of the present invention;
Fig. 3 is a schematic view of the C-C section of the radar support in Fig. 2 after being mounted to a bumper skin;
Fig. 4 is an enlarged view of the A part of Fig. 2;
Fig. 5 is a schematic structural view of a crisscross rib provided by an embodiment of the present invention.

Preferred embodiments of the present invention are provided and described in detail below in reference to the accompanying drawings.

As shown in Figs. 2 and 3, an embodiment of the present invention provides a radar support comprising a support body 11 provided with a radar fitting aperture 111 for mounting a radar. A welding part 12 is provided at the periphery of the support body 11. As shown in the figures, the welding part 12 can be provided respectively at left and right sides of the support body 11. The welding part 12 is provided with a welding region. The radar support is fixedly connected to a bumper skin 2 by welding in the welding region. The welding part 12 has a plurality of buffer apertures 121 spaced apart from each other. A crisscross rib 122 is arranged between two adjacent buffer apertures 121. The welding part 12 is symmetrically arranged at both sides of the support body 11 with symmetric configurations of the buffer apertures 121 and the crisscross ribs 122. During welding, the solder joints are set on the crisscross ribs 122 and can be located at any position of the crisscross ribs 122. Thus, it can be ensured that during welding, the weld heads are welded on the crisscross ribs 122 and the amount of molten welding material can be increased, thereby improving the welding tensile (pull-out) force so that it meets requirements. As the radar support is heated and expands during welding, its size will increase. After it cools down, contraction stress will appear, causing the bumper skin 2 to deform. By setting the buffer apertures 121, each crisscross rib 122 ( thus its associated solder joint) on the radar support is independent and disconnected from each other. When the radar support expands and deforms by heating during welding, the buffer apertures 121 provide a space for deformation, so that the entire radar support will hardly undergo thermal expansion and deformation, thus eliminating thermal expansion and contraction stress and thereby eliminating welding marks. In other words, the expansion during the welding and heating process and the subsequent contraction of the radar support are scattered as local and disconnected, which can be absorbed by the corresponding buffer apertures locally one by one without causing any general or overall deformation to the radar support.

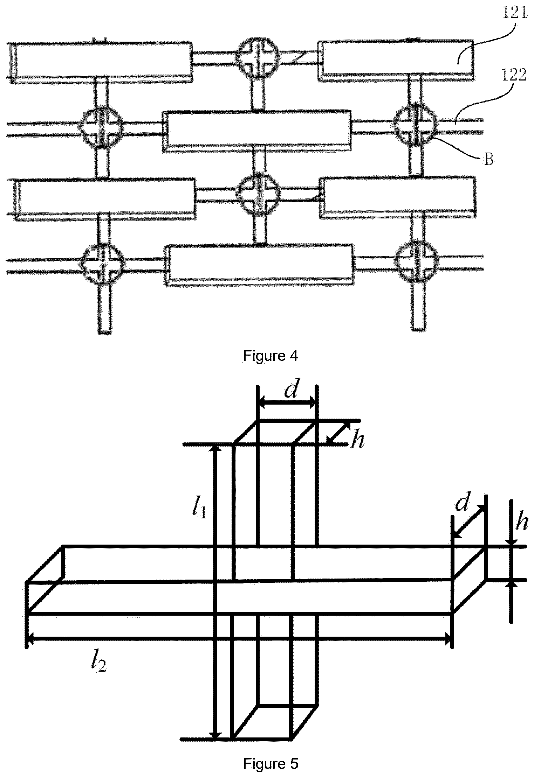

As shown in Fig. 4, a solder joint B can preferably be arranged at the center of a crisscross rib 122. Thus, it can expand and deform uniformly towards the buffer apertures on two sides when it is heated and expands, avoiding two adjacent solder joints B being too close to each other and affecting each other, which will lead to thermal expansion and deformation of the radar support as a whole, resulting in welding marks.

Also as shown in Fig. 4, the buffer apertures 121 are of essentially a same shape and size, and distributed in a mesh structure with a essentially uniform transversal and longitudinal spacing between each other. Preferentially, the crisscross rib 122 is arranged both between two adjacent buffer apertures 121 along a transversal direction and between two adjacent buffer apertures 121 along a longitudinal direction perpendicular to the transversal direction.

The buffer apertures 121 can be provided in the shape of a rectangle, square, oval or any other appropriate form, which do not limit the present invention. In the present embodiment, the buffer apertures 121 are in the shape of a rectangle. It can be provided that their length, width, and height are respectively 4.5 to 5 mm, 0.6 to 1 mm, and 1.0 to 1.5 mm. As rectangular apertures are easy to process, preferably, buffer apertures are rectangular.

The spacing distance between adjacent buffer apertures 121 can be set according to the spacing between welding teeth of a welding head and be kept consistent with the spacing between welding teeth. For example, in the present embodiment, the transversal spacing between adjacent buffer apertures 121 is 3 to 4 mm, and the longitudinal spacing is 2.5 to 3.5 mm, preferably, the transversal spacing is 3.3 mm, and the longitudinal spacing is 2.8 mm. It should be noted that, if the spacing between buffer apertures 121 has already been set, the spacing between welding teeth can also be set according to the spacing between buffer apertures 121 so as to keep the two consistent.

As shown in Fig. 5, the longitudinal length I1 and transversal length I2 of the crisscross ribs 122 are respectively equal to the longitudinal spacing and transversal spacing between the buffer apertures 121, while the height h and width d of the crisscross ribs 122 can be adjusted according to the welding tensile force required. In the present embodiment, their height h is 0.3 mm, and their width d is 0.3 to 0.5 mm. When the welding tensile force required is relatively large, the width d can be set to 0.5 mm.

The support body 11, the welding part 12, the buffer apertures 121, and the crisscross ribs 122 are formed integrally by injection molding in one piece, so that they are easier to process and the costs are reduced.

When calibrating the solder equipment before welding, the position of welding teeth of a welding head needs to be adjusted according to the position of the buffer apertures 121 so that the welding teeth are accurately located on the crisscross ribs 122, preferably at the center of the crisscross ribs 122. Thus, not only more molten material can be created when welding the radar support, increasing the welding tensile force, but also the spacing distance between two solder joints can be sufficiently large so that the entire radar support does not undergo deformation as a whole, thereby eliminating thermal expansion and contraction stress and thus solder marks.

It should be noted that the structure of the buffer apertures 121 and the crisscross ribs 122 of the present invention is not limited to a radar support, but can be adapted to all structures with penetration welding, such as an air curtain or a reinforcing support, which do not limit the present invention.

In a preferred embodiment (not shown), the buffer apertures 121 contain veil or thickness reduction material in its full or partial aperture area.

The radar support of the present invention, by setting a plurality of crisscross ribs 122 on the welding part 12 of the radar support, enables the weld heads to be welded onto the crisscross ribs 122 during welding, thus increasing the quantity of the molten welding material and increasing the welding tensile force. By arranging the buffer apertures 121 between the crisscross ribs, a deformation space is provided for the expansion of the radar support during the welding and heating process, so that the entire radar support hardly undergoes thermal expansion and deformation as a whole, thereby eliminating thermal expansion and contraction stress, and thereby eliminating welding marks.

What have been described above are only preferred embodiments of the present invention, and are not intended to limit the scope of the present invention. Various changes can also be made to the above-described embodiments of the present invention. That is, all simple and equivalent changes and modifications made according to the claims and description of the present invention application fall into the protection scope of the claims of the present invention patent. What is not described in detail in this invention is conventional technical content.

## Claims

1. A support structure, configured to be welded to a vehicle body part (2), comprising:
- a support body (11), preferentially provided with a mounting means (111) for attaching a technical element;
- a welding part (12), arranged at a periphery of the support body (11),
**characterized in that**, the welding part (12) includes:
• a plurality of buffer apertures (121) spaced apart from each other,
• a plurality of crisscross ribs (122), each crisscross rib being disconnected from each other and arranged between two adjacent buffer apertures (121),
wherein a solder joint between the support structure and the vehicle body part (2) is located on the crisscross rib (122).

2. The support structure according to claim 1, wherein the solder joint is located at a center of the crisscross rib (122).

3. The support structure according to any one of the precedent claims, wherein the buffer apertures (121) are of essentially a same shape and size, and distributed in a mesh structure with a essentially uniform transversal and longitudinal spacing between each other.

4. The support structure according to the precedent claim, wherein the crisscross ribs (122) are arranged both between two adjacent buffer apertures (121) along a transversal direction and between two adjacent buffer apertures (121) along a longitudinal direction perpendicular to the transversal direction, wherein a longitudinal length (11) and a transversal length (I2) of the crisscross ribs (122) are respectively equal to the longitudinal spacing and the transversal spacing between the buffer apertures (121).

5. The support structure according to any one of the precedent claims, wherein the welding part (12) is symmetrically arranged at both sides of the support body (11) with symmetric configurations of the buffer apertures (121) and the crisscross ribs (122).

6. The support structure according to any one of the precedent claims, wherein the buffer apertures (121) contain veil or thickness reduction material in its full or partial aperture area.

7. The support structure according to any one of the precedent claims, wherein the buffer apertures (121) are in a shape of a rectangle, a square, or an oval.

8. The support structure according to any one of the precedent claims, wherein a transversal spacing between two adjacent buffer apertures (121) is 3 to 4 mm, and a longitudinal spacing between two adjacent buffer apertures (121) is 2.5 to 3.5 mm.

9. The support structure according to the precedent claim, wherein the transversal spacing is 3.2 mm and the longitudinal spacing is 2.8 mm.

10. The support structure according to claim 7, wherein the length, width, and height of the buffer apertures (121) are respectively 4.7 to 5 mm, 0.8 to 1 mm, and 1.2 to 1.5 mm.

11. The support structure according to any one of the precedent claims, wherein the height (h) of the crisscross ribs (122) is 0.3 mm, and the width (d) of the crisscross ribs (122) is 0.3 to 0.5 mm.

12. The support structure according to any one of the precedent claims, wherein the buffer apertures (121), the crisscross ribs (122), the welding part (12), and the support body (11) are integrally formed by injection molding.

13. The support structure according to any one of the precedent claims, wherein the support structure is a radar support, an air curtain or a reinforcing support.

14. Body part of a vehicle (2), for example a bumper skin (2), **characterized in that**, it comprises the support structure according to any one of the precedent claims.

## Patentansprüche

1. Trägerstruktur, die zum Anschweißen an ein Fahrzeugkarosserieteil (2) ausgebildet ist, aufweisend:
- einen Trägerkörper (11), der vorzugsweise mit einem Befestigungsmittel (111) zur Anbringung eines technischen Elements versehen ist;
- ein Schweißteil (12), das an einem Umfang des Trägerkörpers (11) angeordnet ist,
**dadurch gekennzeichnet, dass** das Schweißteil (12) aufweist:
eine Vielzahl von Pufferöffnungen (121), die voneinander beabstandet sind,
eine Vielzahl von kreuzförmigen Rippen (122), wobei jede kreuzförmige Rippe voneinander getrennt und zwischen zwei benachbarten Pufferöffnungen (121) angeordnet ist,
wobei eine Lötstelle zwischen der Trägerstruktur und dem Fahrzeugkarosserieteil (2) an der kreuzförmigen Rippe (122) angeordnet ist.

2. Trägerstruktur nach Anspruch 1, wobei sich die Lötstelle in der Mitte der kreuzförmigen Rippe (122) befindet.

3. Trägerstruktur nach einem der vorhergehenden Ansprüche, wobei die Pufferöffnungen (121) im Wesentlichen die gleiche Form und Größe haben und in einer Maschenstruktur mit einem im Wesentlichen gleichmäßigen Quer- und Längsabstand zueinander verteilt sind.

4. Trägerstruktur nach dem vorhergehenden Anspruch, wobei die Kreuzrippen (122) sowohl zwischen zwei benachbarten Pufferöffnungen (121) entlang einer Querrichtung als auch zwischen zwei benachbarten Pufferöffnungen (121) entlang einer Längsrichtung senkrecht zur Querrichtung angeordnet sind, wobei eine Längslänge (l1) und eine Querlänge (I2) der kreuzförmigen Rippen (122) jeweils gleich dem Längsabstand und dem Querabstand zwischen den Pufferöffnungen (121) sind.

5. Trägerstruktur nach einem der vorhergehenden Ansprüche, wobei das Schweißteil (12) symmetrisch an beiden Seiten des Trägerkörpers (11) mit symmetrischen Konfigurationen der Pufferöffnungen (121) und der kreuzförmigen Rippen (122) angeordnet ist.

6. Trägerstruktur nach einem der vorhergehenden Ansprüche, wobei die Pufferöffnungen (121) in ihrem gesamten oder teilweisen Öffnungsbereich Schleier- oder Dickenreduktionsmaterial enthalten.

7. Trägerstruktur nach einem der vorhergehenden Ansprüche, wobei die Pufferöffnungen (121) die Form eines Rechtecks, eines Quadrats oder eines Ovals haben.

8. Trägerstruktur nach einem der vorhergehenden Ansprüche, wobei der Querabstand zwischen zwei benachbarten Pufferöffnungen (121) 3 bis 4 mm und der Längsabstand zwischen zwei benachbarten Pufferöffnungen (121) 2,5 bis 3,5 mm beträgt.

9. Tragstruktur nach dem vorhergehenden Anspruch, wobei der Querabstand 3,2 mm und der Längsabstand 2,8 mm beträgt.

10. Trägerstruktur nach Anspruch 7, wobei die Länge, Breite und Höhe der Pufferöffnungen (121) jeweils 4,7 bis 5 mm, 0,8 bis 1 mm und 1,2 bis 1,5 mm betragen.

11. Trägerstruktur nach einem der vorhergehenden Ansprüche, wobei die Höhe (h) der kreuzförmigen Rippen (122) 0,3 mm und die Breite (d) der kreuzförmigen Rippen (122) 0,3 bis 0,5 mm beträgt.

12. Trägerstruktur nach einem der vorhergehenden Ansprüche, wobei die Pufferöffnungen (121), die kreuzförmigen Rippen (122), das Schweißteil (12) und der Trägerkörper (11) einstückig durch Spritzgießen hergestellt sind.

13. Trägerstruktur nach einem der vorhergehenden Ansprüche, wobei die Trägerstruktur ein Radarträger, ein Luftvorhang oder eine verstärkende Stütze ist.

14. Karosserieteil eines Fahrzeugs (2), z.B. eine Stoßfängerhaut (2), **dadurch gekennzeichnet, dass** es die Trägerstruktur nach einem der vorhergehenden Ansprüche aufweist.

## Revendications

1. Une structure de support, configurée pour être soudée à une partie de carrosserie de véhicule (2), comprenant :
- un corps de support (11), pourvu préférentiellement d'un moyen de montage (111) pour la fixation d'un élément technique ;
- une partie de soudure (12), disposée à une périphérie du corps de support (11),
**caractérisée en ce que**, la partie de soudure (12) comprend :
• une pluralité d'ouvertures tampons (121) espacées les unes des autres,
• une pluralité de nervures entrecroisées (122), chaque nervure entrecroisée étant déconnectée l'une de l'autre et disposée entre deux ouvertures tampons adjacentes (121),
dans lequel un joint de soudure entre la structure de support et la partie de carrosserie du véhicule (2) est situé sur la nervure entrecroisée (122).

2. Structure de support selon la revendication 1, dans laquelle le joint de soudure est situé au centre de la nervure entrecroisée (122).

3. Structure de support selon l'une quelconque des revendications précédentes, dans laquelle les ouvertures tampon (121) sont essentiellement de la même forme et de la même taille, et distribuées dans une structure en treillis avec un espacement transversal et longitudinal essentiellement uniforme entre elles.

4. Structure de support selon la revendication précédente, dans laquelle les nervures entrecroisées (122) sont disposées à la fois entre deux ouvertures tampons adjacentes (121) le long d'une direction transversale et entre deux ouvertures tampons adjacentes (121) le long d'une direction longitudinale perpendiculaire à la direction transversale, dans laquelle une longueur longitudinale (l1) et une longueur transversale (l2) des nervures entrecroisées (122) sont respectivement égales à l'espacement longitudinal et à l'espacement transversal entre les ouvertures tampon (121).

5. Structure de support selon l'une quelconque des revendications précédentes, dans laquelle la partie de soudure (12) est disposée symétriquement des deux côtés du corps de support (11) avec des configurations symétriques des ouvertures tampon (121) et des nervures entrecroisées (122).

6. Structure de support selon l'une quelconque des revendications précédentes, dans laquelle les ouvertures tampon (121) contiennent un voile ou un matériau de réduction d'épaisseur dans sa surface d'ouverture totale ou partielle.

7. Structure de support selon l'une quelconque des revendications précédentes, dans laquelle les ouvertures tampon (121) ont la forme d'un rectangle, d'un carré ou d'un ovale.

8. Structure de support selon l'une quelconque des revendications précédentes, dans laquelle un espacement transversal entre deux ouvertures tampons adjacentes (121) est de 3 à 4 mm, et un espacement longitudinal entre deux ouvertures tampons adjacentes (121) est de 2,5 à 3,5 mm.

9. Structure de support selon la revendication précédente, dans laquelle l'espacement transversal est de 3,2 mm et l'espacement longitudinal est de 2,8 mm.

10. Structure de support selon la revendication 7, dans laquelle la longueur, la largeur et la hauteur des ouvertures tampon (121) sont respectivement de 4,7 à 5 mm, 0,8 à 1 mm et 1,2 à 1,5 mm.

11. Structure de support selon l'une quelconque des revendications précédentes, dans laquelle la hauteur (h) des nervures entrecroisées (122) est de 0,3 mm et la largeur (d) des nervures entrecroisées (122) est de 0,3 à 0,5 mm.

12. Structure de support selon l'une quelconque des revendications précédentes, dans laquelle les ouvertures tampon (121), les nervures entrecroisées (122), la partie de soudure (12) et le corps de support (11) sont intégralement formés par moulage par injection.

13. Structure de support selon l'une quelconque des revendications précédentes, dans laquelle la structure de support est un support de radar, un rideau d'air ou un support de renforcement.

14. Partie de carrosserie d'un véhicule (2), par exemple une peau de pare-chocs (2), **caractérisée en ce qu'**elle comprend la structure de support selon l'une quelconque des revendications précédentes.
